(19) **Europäisches Patentamt European Patent Office Office européen des brevets**

(11) **EP 4 663 516 A1**

(12) **EUROPEAN PATENT APPLICATION**
published in accordance with Art. 153(4) EPC

(43) Date of publication:
**17.12.2025 Bulletin 2025/51**

(51) International Patent Classification (IPC):
**B62D 6/00** (2006.01) **B62D 13/06** (2006.01)
**B62D 113/00** (2006.01) **B62D 115/00** (2006.01)

(21) Application number: **24753417.5**

(52) Cooperative Patent Classification (CPC):
**B62D 6/00; B62D 13/06**

(22) Date of filing: **08.02.2024**

(86) International application number:
**PCT/JP2024/004290**

(87) International publication number:
**WO 2024/166974 (15.08.2024 Gazette 2024/33)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **09.02.2023 JP 2023018568**

(71) Applicant: **JTEKT Corporation**
**Kariya-shi, Aichi 448-8652 (JP)**

(72) Inventor: **NITTA, Nobuhiro**
**Tokyo 103-0022 (JP)**

(74) Representative: **Winter, Brandl - Partnerschaft mbB**
**Alois-Steinecker-Straße 22**
**85354 Freising (DE)**

(54) **JACKKNIFE COUNTERMEASURE DEVICE FOR COUPLED VEHICLE, JACKKNIFE COUNTERMEASURE METHOD FOR COUPLED VEHICLE, AND JACKKNIFE COUNTERMEASURE PROGRAM FOR COUPLED VEHICLE**

(57) A jackknifing averting device (50) for an articulated vehicle is configured to execute determining processing and handling processing. The determining processing is processing of determining whether a logical product of a magnitude of a value of a steered angle variable being no less than a predetermined value, the value of the steered angle variable being a value indicating one of a right turn or a left turn and also a value of a hitch angle variable being a value indicating the other of the right turn or the left turn, and a rate of increase of a magnitude of the value of the hitch angle variable being no less than a threshold value, is true. The steered angle variable is a variable indicating a steered angle of a steered wheel of the articulated vehicle. The hitch angle variable is a variable indicating an angle that is made between a front-rear direction of a tractor and a front-rear direction of the trailer. The handling processing is processing of averting a jackknifing phenomenon, and is executed in a case in which the logical product is determined to be true while the articulated vehicle is traveling in reverse.

Fig.2

## Description

TECHNICAL FIELD

The present disclosure relates to a jackknifing averting device for an articulated vehicle, a jackknifing averting method for an articulated vehicle, and a jackknifing averting program for an articulated vehicle.

BACKGROUND ART

Patent Document 1 that is listed below, for example, describes a device that determines that an articulated vehicle has lapsed into a jackknifing state. The device uses a model of an articulated vehicle to determine the jackknifing state.

Related Art Documents

Patent Documents

Patent Document 1: US Patent No. 9229452

SUMMARY OF THE INVENTION

Problem to be Solved by the Invention

Now, there are multiple types of trailers that can be linked to a tractor. Accordingly, the model used to determine the jackknifing state should be changed in accordance with the type of the trailer.

Means for Solving the Problem

One aspect of the present disclosure provides a jackknifing averting device for an articulated vehicle in which a tractor and a trailer are linked. The jackknifing averting device is configured to execute acquisition processing, determining processing, and handling processing. The acquisition processing is processing of acquiring a value of a steered angle variable, and a value of a hitch angle variable. The steered angle variable is a variable indicating a steered angle of a steered wheel of the articulated vehicle. The hitch angle variable is a variable indicating an angle that is made between a front-rear direction of the tractor and a front-rear direction of the trailer. The determining processing is processing of determining whether a logical product of a magnitude of the value of the steered angle variable being no less than a predetermined value, the value of the steered angle variable being a value indicating one of a right turn or a left turn and also the value of the hitch angle variable being a value indicating the other of the right turn or the left turn, and a rate of increase of a magnitude of the value of the hitch angle variable being no less than a threshold value, is true. The handling processing is processing of averting a jackknifing phenomenon, and is executed in a case in which the logical product is determined to be true while the articulated vehicle is traveling in reverse.

Another aspect of the present disclosure provides a jackknifing averting method for an articulated vehicle in which a tractor and a trailer are linked. The jackknifing averting method for an articulated vehicle includes executing acquisition processing, executing determining processing, and executing handling processing. The acquisition processing is processing of acquiring a value of a steered angle variable, and a value of a hitch angle variable. The steered angle variable is a variable indicating a steered angle of a steered wheel of the articulated vehicle. The hitch angle variable is a variable indicating an angle that is made between a front-rear direction of the tractor and a front-rear direction of the trailer. The determining processing is processing of determining whether a logical product of a magnitude of the value of the steered angle variable being no less than a predetermined value, the value of the steered angle variable being a value indicating one of a right turn or a left turn and also the value of the hitch angle variable being a value indicating the other of the right turn or the left turn, and a rate of increase of a magnitude of the value of the hitch angle variable being no less than a threshold value, is true. The handling processing is processing of averting a jackknifing phenomenon, and is executed in a case in which the logical product is determined to be true while the articulated vehicle is traveling in reverse.

Another aspect of the present disclosure provides a jackknifing averting program for an articulated vehicle in which a tractor and a trailer are linked. The jackknifing averting program includes commands for causing a computer to execute acquisition processing, determining processing, and handling processing. The acquisition processing is processing of acquiring a value of a steered angle variable, and a value of a hitch angle variable. The steered angle variable is a variable indicating a steered angle of a steered wheel of the articulated vehicle. The hitch angle variable is a variable indicating an angle that is made between a front-rear direction of the tractor and a front-rear direction of the trailer. The determining processing is processing of determining whether a logical product of a magnitude of the value of the steered angle variable being no less than a predetermined value, the value of the steered angle variable being a value indicating one of a right turn or a left turn and also the value of the hitch angle variable being a value indicating the other of the right turn or the left turn, and a rate of increase of a magnitude of the value of the hitch angle variable being no less than a threshold value, is true. The handling processing is processing of averting a jackknifing phenomenon, and is executed in a case in which the logical product is determined to be true while the articulated vehicle is traveling in reverse.

BRIEF DESCRIPTION OF THE DRAWINGS

[FIG. 1] FIG. 1 is a diagram exemplifying an articulated vehicle according to a first embodiment.

[FIG. 2] FIG. 2 is a block diagram illustrating a configuration of a control system in the articulated vehicle illustrated in FIG. 1.

[FIG. 3] FIG. 3 is a flowchart showing procedures of processing that is executed by a control device in the control system illustrated in FIG. 2.

[FIG. 4] FIG. 4 is a diagram illustrating a model of the articulated vehicle illustrated in FIG. 1.

[FIG. 5] FIG. 5 is a flowchart showing procedures of processing that is executed by the control device shown in FIG. 3.

[FIG. 6] FIG. 6A and FIG. 6B are diagrams illustrating jackknifing states of the articulated vehicle illustrated in FIG. 1.

[FIG. 7] FIG. 7 is a diagram showing a principle of detecting jackknifing.

[FIG. 8] FIG. 8 is a flowchart showing procedures of processing that is executed by a control device according to a second embodiment.

## MODES FOR CARRYING OUT THE INVENTION

### <First Embodiment>

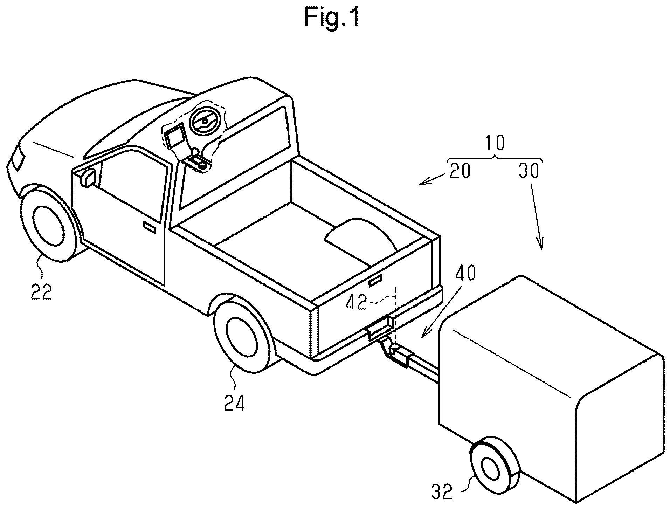

A first embodiment will be described below with reference to the drawings. As illustrated in FIG. 1, an articulated vehicle 10 has a tractor 20 and a trailer 30. The tractor 20 includes front wheels 22 and rear wheels 24. The front wheels 22 include two wheels, which are a right front wheel and a left front wheel, and the rear wheels 24 include two wheels, which are a right rear wheel and a left rear wheel. Also, FIG. 1 exemplifies an enclosed box trailer as the trailer 30. The trailer 30 has wheels 32. The wheels 32 include two wheels, which are a right wheel and a left wheel.

The trailer 30 is linked to a rear portion of the tractor 20 via a ball joint 40. The ball joint 40 is a member that links the trailer 30 to the tractor 20 such that the trailer 30 can rotate about an axis 42. The axis 42 extends in a height direction of the tractor 20.

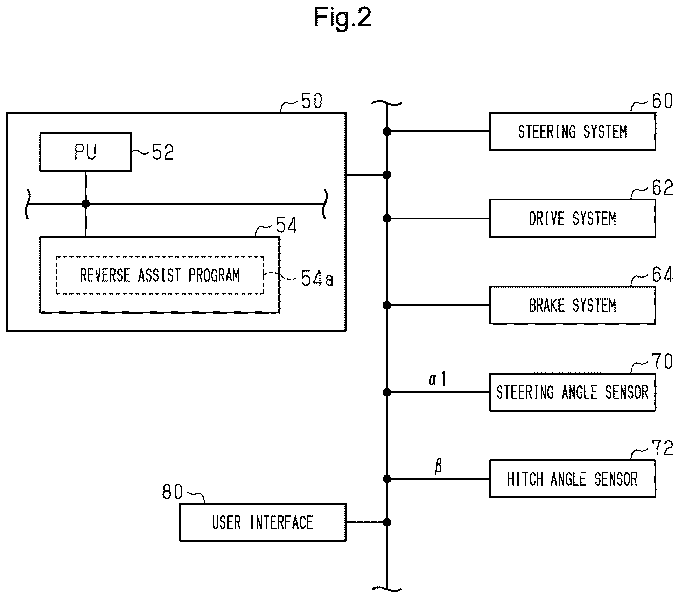

FIG. 2 illustrates part of members that the tractor 20 is equipped with. As illustrated in FIG. 2, the tractor 20 includes a control device 50. The control device 50 operates a steering system 60, a drive system 62, and a brake system 64 in order to control controlled variables of the articulated vehicle 10 as a controlled object. The controlled variables are vehicle speed, direction of travel, hitch angle, and so forth. The hitch angle is an angle that is made between a front-rear direction of the tractor 20 and a front-rear direction of the trailer 30.

The steering system 60 includes a steering actuator that steers steered wheels. An example of the steered wheels is the front wheels 22 illustrated in FIG. 1. Note that in the present embodiment, as an example, the steering system 60 includes a steering control device that operates a steering actuator. Also, "the control device 50 operates the steering system 60" means that the control device 50 outputs command signals to the steering control device.

The drive system 62 includes at least one of two devices, which are an internal combustion engine and a rotating electrical machine, as a thrust generating device for the vehicle. Note that the drive system 62 may include a drive control device regarding which the internal combustion engine and the rotating electrical machine are objects of control. In this case, "the control device 50 operates the drive system 62" means that the control device 50 outputs command signals to the drive control device.

The brake system 64 includes at least one of two devices which are a device that reduces the speed of rotation of the wheels by frictional force, and a device that reduces the speed of rotation of the wheels by converting power of the wheels into electrical energy. Note that the device, which reduces the speed of rotation of the wheels by conversion into electrical energy, may be shared with the rotating electrical machine of the drive system. Also, the brake system 64 may include a brake control device of which the devices that reduce the speed of rotation of the wheels are objects of control. In this case, "the control device 50 operates the brake system 64" means that the control device 50 outputs command signals to the brake control device.

The control device 50 references a steered angle $\alpha1$ of the steered wheels that are detected by a steering angle sensor 70 in order to control the controlled variables. The steered angle $\alpha1$ is a value that takes a positive sign for one of a right turn and a left turn and takes a negative sign for the other. The steered angle $\alpha1$ is a turning angle of tires. Note that in a case in which the steering system 60 includes a rack and pinion mechanism, for example, the steering angle sensor 70 may be a sensor that detects a pinion angle. It should be noted, however, that in this case, the control device 50 executes processing of converting the pinion angle to the turning angle of the tires. Hereinafter, for convenience of description, the turning angle of the tires is regarded as a detection value of the steering angle sensor 70, even if the turning angle is obtained by the above conversion processing.

The control device 50 also references a hitch angle $\beta$ that is detected by a hitch angle sensor 72. The hitch angle $\beta$ may take either a positive sign or a negative sign in accordance with an angle that is made between a direction of travel of the tractor 20 from rear to front thereof and a direction of travel of the trailer 30 from rear to front thereof. For example, the hitch angle $\beta$ may take a positive sign in a case in which the direction of travel of the trailer 30 from rear to front thereof deviates counterclockwise from the direction of travel of the tractor 20 from rear to front thereof by less than 180°.

The control device 50 sets control of the controlled variables in accordance with an operating state of a user interface 80. The user interface 80 is used to transmit intentions of a user to the control device 50, such as an intention to select one of the two of automated driving and manual driving, or the like.

The control device 50 includes a PU 52 and a storage device 54. The PU 52 is a software processing device including at least one of a CPU, a GPU, a TPU, and so forth. The storage device 54 stores a reverse assist program 54a. The reverse assist program 54a is a program that defines commands to cause the PU 52 to execute reverse assist processing. The reverse assist processing is processing of automatically performing steering processing of the steered wheels when the articulated vehicle 10 is traveling in reverse. The reverse assist program 54a is a program for reducing a burden of reverse driving on a driver.

That is to say, when the articulated vehicle 10 is traveling in reverse, even when the steered angle $\alpha 1$ of the tractor 20 is the same, behavior of the trailer 30 will change depending on the hitch angle $\beta$. Accordingly, reverse control requires advanced driving skills. The reverse assist processing by the reverse assist program 54a is processing of assisting the driver by controlling the steered angle $\alpha 1$ of the tractor 20. Note however, that in the reverse assist processing, instructions to steer the trailer 30 are entrusted to the driver. This is because requests to the control device 50 increase in a case in which the control device 50 also sets steering of the trailer 30. Entrusting part of instructions to the driver enables the reverse control to be executed by relatively simple processing.

"Steering in Reverse Assist Processing"

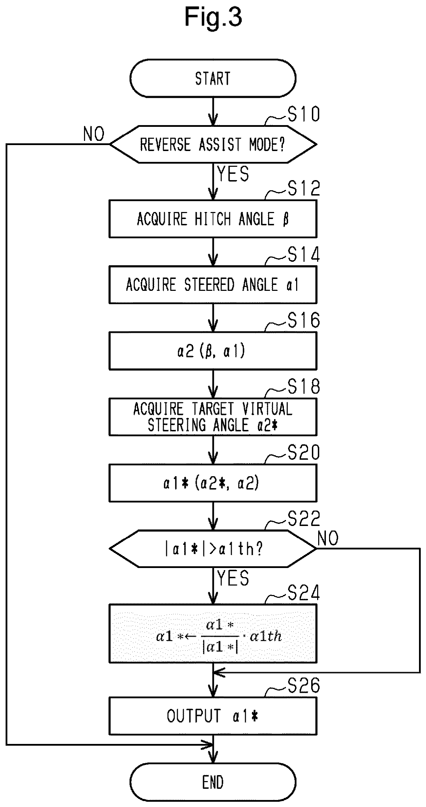

FIG. 3 shows procedures of processing of the reverse assist processing. The processing shown in FIG. 3 is realized by the PU 52 repeatedly executing the reverse assist program 54a in predetermined cycles, for example. Note that in the following description, numbers preceded by the letter "S" represent step numbers of each processing.

In the series of processing shown in FIG. 3, the PU 52 first determines whether a current mode is a reverse assist mode (S10). In a case in which determination is made that the current mode is the reverse assist mode (S10: YES), the PU 52 acquires the hitch angle $\beta$ that is detected by the hitch angle sensor 72 (S12). Also, the PU 52 acquires the steered angle $\alpha 1$ that is detected by the steering angle sensor 70 (S14).

The PU 72 then takes the steered angle $\alpha 1$ and the hitch angle $\beta$ as inputs, and calculates a virtual steering angle $\alpha 2$ (S16). The virtual steering angle $\alpha 2$ is a variable that indicates a direction of travel of a linking point between the trailer 30 and the tractor 20. In other words, this is a variable that indicates the direction of travel of the axis 42 illustrated in FIG. 1. In the present embodiment, as an example, the virtual steering angle $\alpha 2$ is defined by an angle that is made between a direction of travel of the ball joint 40 with respect to the front-rear direction of the trailer 30.

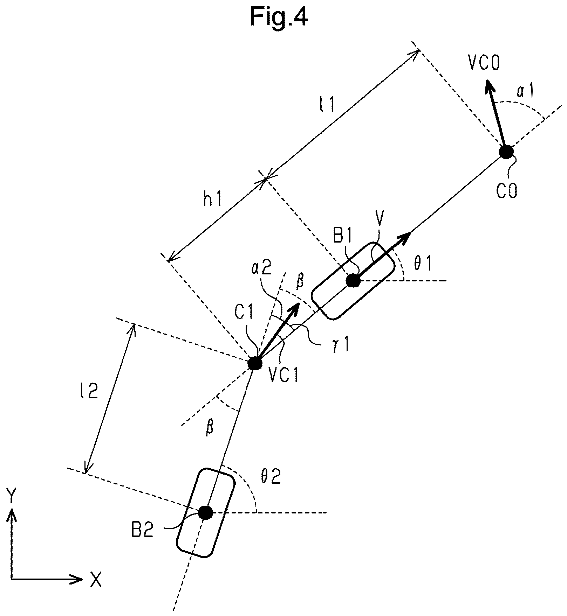

The reason for calculating the virtual steering angle $\alpha 2$ from the steered angle $\alpha 1$ and the hitch angle $\beta$ will be described here with reference to FIG. 4. FIG. 4 illustrates a model of the articulated vehicle 10 that is used in the present embodiment. In the model illustrated in FIG. 4, a pair of the front wheels 22 of the tractor 20 is deemed to be a single front wheel C0, and also a pair of the rear wheels 24 of the tractor 20 is deemed to be a single rear wheel B1. That is to say, a two-wheel model is employed regarding the tractor 20. Also, in the model illustrated in FIG. 4, a pair of wheels 32 of the trailer 30 is deemed to be a single wheel B2. An angle that is made between a line that is determined by the front wheel C0 and a hitch point C1, and a line determined by the hitch point C1 and the wheel B2, is the hitch angle $\beta$. The hitch point C1 corresponds to the axis 42 portion in FIG. 1. Also, a front wheel speed VC0, which is speed of the front wheel C0, is a vector of advance in a direction of the steered angle $\alpha 1$. The steered angle $\alpha 1$ is quantified as an angle made between a direction in which the front wheel C0 advances and the line that is determined by the front wheel C0 and the hitch point C1. A direction of vehicle speed V is parallel to the line that is determined by the front wheel C0 and the hitch point C1. Also, an angle that is made between a direction of the vehicle speed V and an x direction in FIG. 4 is an angle $\theta 1$. Also, an angle that is made between the line connecting the wheel B2 and the hitch point C1, and the x direction, is an angle $\theta 2$. Also, a distance l1 is a length between the front wheel C0 and the rear wheel B1. Also, a distance h1 is a length between the rear wheel B1 and the hitch point C1.

According to the above definitions, the angle that is made between a direction of travel from the wheel B2 to the hitch point C1 and a direction of speed VC1 of the hitch point C1 is the virtual steering angle $\alpha 2$. The virtual steering angle $\alpha 2$ is expressed as "$-(\beta - \gamma 1)$", using an angle $\gamma 1$ of the direction of the speed VC1 of the hitch point C1 with respect to a direction of travel from the hitch point C1 to the front wheel C0.

In the model illustrated in FIG. 4, the following Expressions (c1) to (c3) hold when using coordinates (xc0, yc0) of the front wheel C0, coordinates (xb1, yb1) of the rear wheel B1, and coordinates (xc1, yc1) of the hitch point C1.

$$VC0 \cdot \cos\alpha 1 = VB1 \ ...(c1)$$

$$xc0 = xb1 + l1 \cdot \cos\theta 1 \ ...(c2)$$

$$xc1 = xb1 - h1 \cdot \cos\theta 1 \ ...(c3)$$

The following Expression (c4) is obtained using an expression obtained by differentiating both sides of the above Expressions (c2) and (c3), and the Expression (c1).

$$h1 \cdot \tan\alpha 1 + l1 \cdot \tan\gamma 1 = 0 \;\dots(c4)$$

According to the above Expression (c4), the angle $\gamma 1$ can be expressed by the steered angle $\alpha 1$. Accordingly, the virtual steering angle $\alpha 2$ is expressed by the following Expression (c5).

$$\alpha 2 = -\beta - \arctan\{(h1/l1) \cdot \tan(\alpha 1)\} \;\dots(c5)$$

That is to say, the virtual steering angle $\alpha 2$ can be found from the hitch angle $\beta$ and the steered angle $\alpha 1$. The processing of S16 shown in FIG. 3 may be processing using the above Expression (c5). Also, the processing of S16 may be processing in which the PU 52 uses map data that is stored in the storage device 54 to perform map computation of the virtual steering angle $\alpha 2$. The map data is data in which the hitch angle $\beta$ and the steered angle $\alpha 1$ are input variables, and also the virtual steering angle $\alpha 2$ is an output variable.

Now, the map data is a data set of discrete values of the input variables and values of the output variable corresponding to each of the values of the input variables. Also, the map computation can be processing that, in a case in which the values of the input variables agree with any of the values of the input variables in the map data, takes a corresponding value of the output variable in the map data as a computation result. Also, the map computation can be processing that, in a case in which the values of the input variables do not agree with any of the values of the input variables in the map data, takes a value that is obtained by interpolating a plurality of values of the output variable that are included in the map data as a computation result. Also, alternatively, the map computation may be processing that, in a case in which the values of the input variables do not agree with any of the values of the input variables in the map data, takes the value of the output variable in the map data that corresponds to a closest value out of values of a plurality of the input variables that are included in the map data, as a calculation result.

Returning to FIG. 3, the PU 52 acquires a target virtual steering angle $\alpha 2^*$ that is input to the user interface 80 (S18). The target virtual steering angle $\alpha 2^*$ is a target value of the virtual steering angle $\alpha 2$. The target virtual steering angle $\alpha 2^*$ is a variable that indicates an instruction that is given by the driver regarding the steering of the trailer 30. Note that the processing in S18 corresponds to instruction reception processing.

Next, the PU 52 calculates a target steered angle $\alpha 1^*$ as a manipulated variable of feedback control in which the virtual steering angle $\alpha 2$ is a controlled variable and also the target virtual steering angle $\alpha 2^*$ is a target value of the controlled variable (S20). Now, the feedback control may be, for example, processing in which an output value of a proportional element, which takes as input a difference between the target virtual steering angle $\alpha 2^*$ and the virtual steering angle $\alpha 2$, is

the target steered angle $\alpha 1^*$. Also, for example, the feedback control may be processing in which a sum of an output value of a proportional element and an output value of an integral element, which take as input a value in accordance with the difference between the target virtual steering angle $\alpha 2^*$ and the virtual steering angle $\alpha 2$, is the target steered angle $\alpha 1^*$. Also, for example, the feedback control may be processing in which a sum of an output value of a proportional element and an output value of a derivative element, which take as input a value in accordance with the difference between the target virtual steering angle $\alpha 2^*$ and the virtual steering angle $\alpha 2$, is the target steered angle $\alpha 1^*$. Also, for example, the feedback control may be processing in which a sum of an output value of a proportional element, an output value of an derivative element, and an output value of a integral element, which take as input a value in accordance with the difference between the target virtual steering angle $\alpha 2^*$ and the virtual steering angle $\alpha 2$, is the target steered angle $\alpha 1^*$.

The PU 52 then determines whether a magnitude of the target steered angle $\alpha 1^*$ is greater than an upper limit value $\alpha 1$th (S22). The upper limit value $\alpha 1$th is a maximum allowable value in terms of control regarding a magnitude of the steered angle $\alpha 1$. In a case of determining that the magnitude of the target steered angle $\alpha 1^*$ is greater than the upper limit value $\alpha 1$th (S22: YES), the PU 52 executes guard processing of setting the magnitude of the target steered angle $\alpha 1^*$ to the upper limit value $\alpha 1$th (S24). In a case in which the processing of S24 is completed, or in a case in which a negative determination is made in the processing of S22, the PU 52 outputs the target steered angle $\alpha 1^*$ as a command signal to the steering system 60 (S26). That is to say, the PU 52 operates the steering system 60. Note that the processing in steps S20 to S26 corresponds to steered angle control processing.

Note that the PU 52 ends the series of processing shown in FIG. 3 for the time being, in a case in which the processing of S26 is completed, or in a case in which a negative determination is made in the processing of S10.

"Jackknifing Averting Measures"

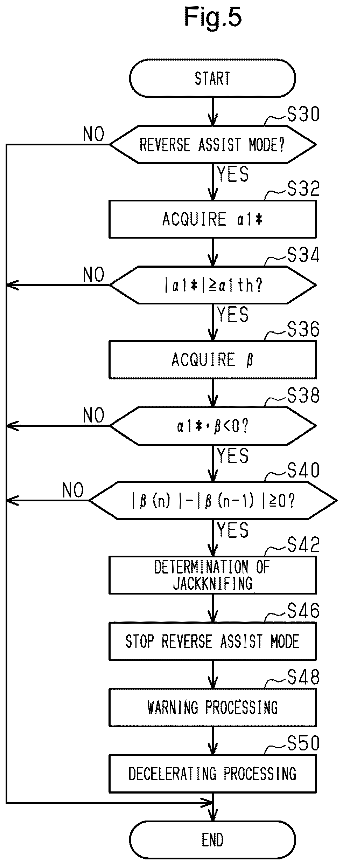

FIG. 5 shows procedures for processing related to jackknifing averting measures in the reverse assist mode. The processing shown in FIG. 5 is realized by the PU 52 repeatedly executing the reverse assist program 54a in predetermined cycles, for example.

In the series of processing shown in FIG. 5, the PU 52 first determines whether the current mode is a reverse assist mode (S30). In a case in which determination is made that the mode is the reverse assist mode (S30: YES), the PU 52 acquires the target steered angle $\alpha 1^*$ (S32). The processing in S32 corresponds to acquisition processing. Next, the PU 52 determines whether the following condition (A) is satisfied (S34).

Condition (A): A condition to the effect that the magnitude of the target steered angle $\alpha1^*$ is no less than the upper limit value $\alpha1th$.

In a case in which determination is made that the condition (A) is satisfied (S34: YES), the PU 52 acquires the hitch angle $\beta$ (S36). The processing in S36 corresponds to acquisition processing. Next, the PU 52 determines whether the following condition (B) is satisfied (S38).

Condition (B): A condition to the effect that the product of the target steered angle $\alpha1^*$ and the hitch angle $\beta$ is negative.

The processing at S38 is processing of determining whether the steered angle $\alpha1$ and the hitch angle $\beta$ have opposite signs. This is processing of determining whether one of the conditions regarding a case of a jackknifing phenomenon occurring is satisfied.

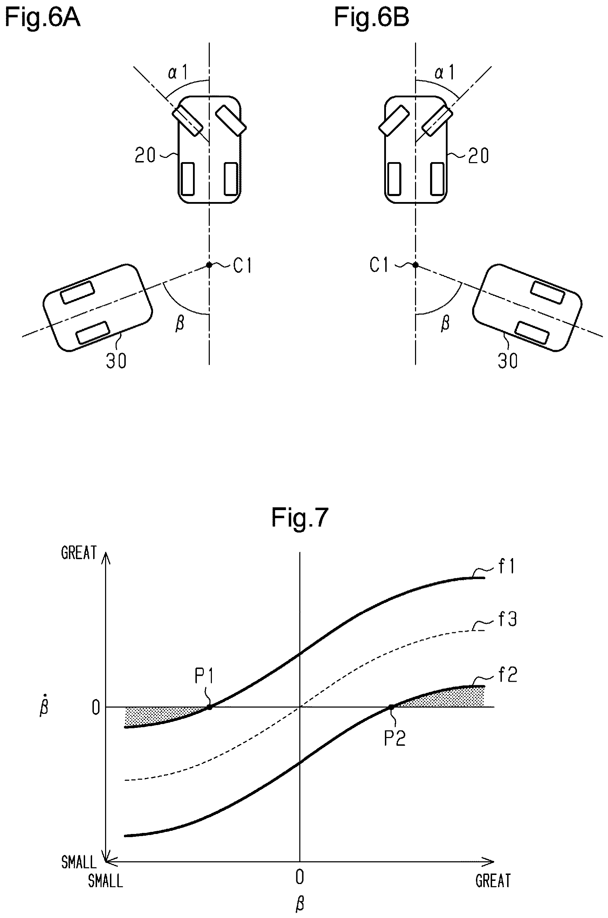

FIG. 6A and FIG. 6B illustrate cases in which the jackknifing phenomenon is occurring. Specifically, FIG. 6A illustrates a case in which the steered angle $\alpha1$ is an angle on the left turning side. In this case, when the hitch angle $\beta$ is a value on the right turning side, the jackknifing phenomenon occurs. On the other hand, FIG. 6B illustrates a case in which the steered angle $\alpha1$ is an angle on the right turning side. In this case, when the hitch angle $\beta$ is a value on the left turning side, the jackknifing phenomenon occurs.

Note that as an example, the steered angle $\alpha1$ and the hitch angle $\beta$ may be defined as positive in a case of rotating counterclockwise about a center of rotation. Returning to FIG. 5, in a case of determining that the condition (B) is satisfied (S38: YES), the PU 52 determines whether the following condition (C) is satisfied (S40).

Condition (C): A condition to the effect that a rate of increase in the magnitude of the hitch angle $\beta$ is no less than zero.

FIG. 5 shows an example in which the rate of increase in the magnitude of the hitch angle $\beta$ is defined by a value that is obtained by subtracting the magnitude of the previous value "$\beta(n-1)$" from the magnitude of the current value "$\beta(n)$" of the hitch angle $\beta$.

FIG. 7 shows the hitch angle $\beta$ and a rate of change of the hitch angle $\beta$ when the jackknifing phenomenon occurs. Curve f1 in FIG. 7 indicates a case in which the steered angle $\alpha1$ is "$+\alpha1th$". Also, curve f2 indicates a case in which the steered angle $\alpha1$ is "$-\alpha1th$". Curve f3 indicates a case in which the steered angle $\alpha1$ is "0".

The jackknifing phenomenon is a phenomenon in which the magnitude of the hitch angle $\beta$ can no longer be reduced by operating the steered angle $\alpha1$. The jackknifing phenomenon occurs in curve f1 in a case in which the hitch angle $\beta$ is negative and also the rate of change of the hitch angle $\beta$ is no greater than zero. Accordingly, as indicated by dots in FIG. 7, point P1, or a region in which the rate of change of the hitch angle $\beta$ is negative, is a region in which jackknifing occurs. Also, the jackknifing phenomenon occurs in curve f2 in a case in which the hitch angle $\beta$ is positive and also the rate of change of the

hitch angle $\beta$ is no less than zero. Accordingly, as indicated by the dots in FIG. 7, point P2, or a region in which the rate of change of the hitch angle $\beta$ is positive, is a region in which jackknifing occurs. Note that the processing in S34, S38, and S40 corresponds to determining processing.

Returning to FIG. 5, in a case of determining that the condition (C) is satisfied (S40: YES), the PU 52 determines that the jackknifing phenomenon has occurred (S42). That is to say, in a case of determining that the logical product of condition (A), condition (B), and condition (C) is true, the PU 52 determines that the jackknifing phenomenon has occurred. The PU 52 then stops the reverse assist mode (S46). That is to say, the PU 52 stops the processing shown in FIG. 3. In other words, the PU 52 stops the processing of operating the steered angle $\alpha1$ in accordance with the target virtual steering angle $\alpha2^*$.

Also, the PU 52 executes warning processing to the effect that the jackknifing phenomenon has occurred (S48). For example, the user interface 80 may be provided with a display device, and also the processing of S48 may be processing of causing the PU 52 to display visual information on the display device to the effect that the jackknifing phenomenon has occurred. Also, for example, the user interface 80 may be provided with a speaker, and also the processing of S48 may be processing in which the PU 52 outputs audio information from the speaker to the effect that the jackknifing phenomenon has occurred. Also, for example, in the case in which the device for inputting the target virtual steering angle $\alpha2^*$ in the user interface 80 is an operating unit that involves physical displacement, the processing of S48 may be processing of the PU 52 vibrating the operation unit. Also, for example, the processing of S48 may be processing of the PU 52 vibrating the steering wheel that operates the steered angle $\alpha1$.

Also, the PU 52 decelerates the articulated vehicle 10 (S50). In the reverse assist mode, in a case in which the PU 52 controls the vehicle speed by operating the drive system 62 and the brake system 64, the processing of S50 may be processing in which the PU 52 reduces a target value for the vehicle speed. Also, in a case in which the vehicle speed is entrusted to accelerator operations by the user in the reverse assist mode, the processing of S50 may be processing in which the PU 52 sets an upper limit value for the vehicle speed. Here, the upper limit value can be set to a value that is lower than the normal vehicle speed that is assumed in the reverse assist mode. Also, in a case in which the vehicle speed is entrusted to accelerator operations by the user in the reverse assist mode, the processing of S50 may be processing in which the PU 52 forcibly intervenes in the vehicle speed control to reduce the target value thereof. Note that the processing in S46 to S50 corresponds to handling processing.

Note that the PU 52 temporarily ends the series of processing shown in FIG. 5 in a case in which the processing of S50 is complete, or in a case in which a negative determination is made in the processing of S30, S34, S38, or S40.

"Functions and Effects of Present Embodiment"

In a case of determining that the logical product of condition (A), condition (B), and condition (C) is true, the PU 52 determines that the jackknifing phenomenon has occurred. Condition (A), condition (B), and condition (C) are conditions that identify a state in which the jackknifing phenomenon occurs, independent of the model of the articulated vehicle 10. Accordingly, determination to the effect that the jackknifing phenomenon has occurred can be made with high precision, regardless of the type of trailer 30 linked to the tractor 20.

According to the present embodiment described above, the functions and effects further described below can be yielded.

(1-1) The PU 52 executes the processing of S48, and accordingly the user can reliably recognize that the jackknifing phenomenon has occurred. Accordingly, the user can resolve the jackknifing phenomenon by stopping the articulated vehicle 10 and then advancing forward, or the like.

(1-2) The PU 52 executes the processing of S50, and accordingly time until the hitch angle $\beta$ becomes excessively great due to the jackknifing phenomenon can be maximally extended. Accordingly, the user can resolve the jackknifing phenomenon before the hitch angle $\beta$ becomes excessively great due to the jackknifing phenomenon.

<Second Embodiment>

A second embodiment will be described below with reference to the drawings, focusing on differences with respect to the first embodiment.

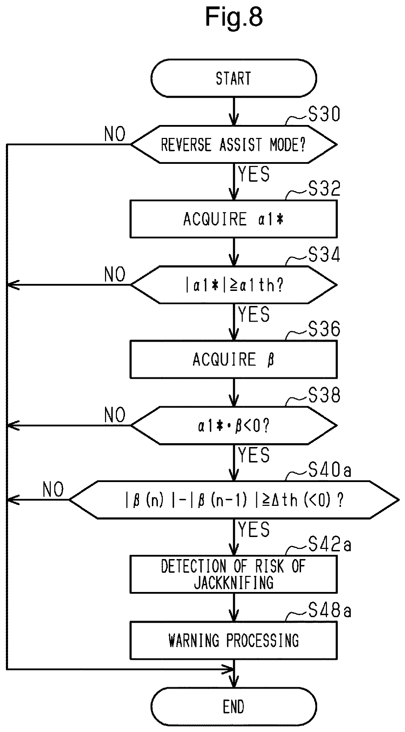

FIG. 8 shows procedures for processing related to jackknifing averting measures in the reverse assist mode according to the present embodiment. The processing shown in FIG. 8 is realized by the PU 52 repeatedly executing the reverse assist program 54a in predetermined cycles, for example. Note that in FIG. 8, processing corresponding to the processing shown in FIG. 5 is denoted by the same step signs, for the sake of convenience.

In the series of processing shown in FIG. 8, instead of the processing of S40, the PU 52 determines whether the following condition (D) is satisfied (S40a). Condition (D): A condition to the effect that the rate of increase in the magnitude of the hitch angle $\beta$ is no less than a defined value $\Delta$th. Here, the defined value $\Delta$th is set to a value smaller than zero.

In a case in which the rate of increase in the magnitude of the hitch angle $\beta$ is less than zero, the hitch angle $\beta$ is not yet in an uncontrollable state. However, in a case in which a rate of decrease in the magnitude of the

hitch angle $\beta$ is excessively small in a state in which condition (A) and condition (B) are satisfied, it is conceivable that the jackknifing phenomenon is likely to occur. Note that the processing in S34, S38, and S40a corresponds to determining processing.

In a case of determining that the logical product of condition (A), condition (B), and condition (D) is true (S40a: YES), the PU 52 determines that there is a high risk of the jackknifing phenomenon occurring (S42a). The PU 52 then executes processing of notifying to the effect that there is a high risk of the jackknifing phenomenon occurring (S48a). Note that the processing in S48a corresponds to handling processing.

Note that in a case in which the processing of S48a is completed, the PU 52 ends the series of processing shown in FIG. 8 for the time being.

<Other Embodiments>

Note that the present embodiments can be carried out modified as follows. The present embodiments and the following modifications can be combined with each other insofar as no technical contradictions arise.

"Regarding Determining Processing"

• In the processing of S34, determination may be made regarding whether the magnitude of the steered angle $\alpha$1 is greater than the upper limit value $\alpha$1th.

- In the processing of S38, determination may be made regarding whether the steered angle $\alpha$1 and the hitch angle $\beta$ have opposite signs.

  - A value that defines a maximum value of the steered angle $\alpha$1 is not limited to the upper limit value $\alpha$1th of the target steered angle $\alpha$1*. For example, this may be a mechanically determined maximum value.

- The condition to the effect that "the magnitude of the steered angle is no less than a predetermined value" does not necessarily have to be a condition that the magnitude of the steered angle is no less than the value that defines the maximum value of the steered angle $\alpha$1. For example, this may be a value that is smaller than the value that defines the maximum value by a predetermined amount. Even in this case, in a case in which the logical product of condition (B) and condition (C) is true, determination can be made to the effect that the risk of the jackknifing phenomenon occurring has increased. Here, condition (C) may be replaced by condition (D).

"Handling Processing"

- Although FIG. 5 shows an example in which all three processing of S46, S48, and S50 are executed, this is not restrictive. For example, just two of the three processing may be executed. Also, for example, just one of the three processing may be executed.

  - In FIG. 8, processing of operating the steered angle $\alpha1$ so as to reduce the absolute value of the hitch angle $\beta$ may be added, as handling processing. This means that the processing of operating the steered angle $\alpha1$ so as to reduce the absolute value of the hitch angle $\beta$ is given precedence over the instruction of the target virtual steering angle $\alpha2^*$.

"Regarding Steered Angle Control Processing"

- The target steered angle $\alpha1^*$ is not limited to the manipulated variable of the feedback control in which the virtual steering angle $\alpha2$ is the controlled variable and also the target virtual steering angle $\alpha2^*$ is the target value of the controlled variable. For example, the target steered angle $\alpha1^*$ may be a manipulated variable of open-loop control in which the virtual steering angle $\alpha2$ is a controlled variable.

  - The controlled variable of the steered angle control processing does not necessarily have to be the virtual steering angle $\alpha2$. For example, the controlled variable of the steered angle control processing may be the path of the trailer 30. In that case, for example, the target steered angle $\alpha1^*$ may be a manipulated variable of feedback control in which the path of the trailer 30 is the controlled variable and also the target value of the path is the target value of the controlled variable. Also, for example, the target steered angle $\alpha1^*$ may be a manipulated variable of open-loop control in which the path of the trailer 30 is the controlled variable. Also, for example, the controlled variable of the steered angle control processing may be the hitch angle $\beta$. In this case, for example, the target steered angle $\alpha1^*$ may be a manipulated variable of feedback control in which the hitch angle $\beta$ is a controlled variable and also the target hitch angle $\beta^*$ is a target value of the controlled variable. Also, for example, the target steered angle $\alpha1^*$ may be a manipulated variable of open-loop control in which the hitch angle $\beta$ is a controlled variable.

"Regarding Control Device"

- The control device is not limited to an arrangement that includes the PU 52 and the storage device 54, and that executes software processing. For example, the control device may include a dedicated hardware circuit such as an ASIC or the like that executes at least part of the processing that is executed in the above embodiments. That is to say, the control device can be equipped with a processing circuit that has any of the following configurations (a) to (c). (a) A processing circuit including a processing device that executes all of the above processing according to a program, and a program storage device such as a storage device or the like that stores the program. (b) A processing circuit including a processing device that executes part of the above processing according to a program, a program storage device, and a dedicated hardware circuit that executes the remainder of the processing. (c) A processing circuit including a dedicated hardware circuit that executes all of the above processing. Now, there may be a plurality of software execution devices that includes a processing device and a program storage device, and a plurality of dedicated hardware circuits.

"Regarding Computer"

- A computer is not limited to the PU 52 that is installed in the vehicle. For example, the processing of S46 to S50 shown in FIG. 5 may be executed by the PU 52, and also the processing of S30 to S42 may be executed by a mobile terminal of the user.

"Regarding Vehicle"

- The articulated vehicle is not limited to the vehicle that is exemplified in FIG. 1.

**Claims**

1. A jackknifing averting device for an articulated vehicle in which a tractor and a trailer are linked, the jackknifing averting device being configured to execute acquisition processing, determining processing, and handling processing, wherein

   the acquisition processing is processing of acquiring a value of a steered angle variable, and a value of a hitch angle variable,
   the steered angle variable is a variable indicating a steered angle of a steered wheel of the articulated vehicle,
   the hitch angle variable is a variable indicating an angle that is made between a front-rear direction of the tractor and a front-rear direction of the trailer,

the determining processing is processing of determining whether a logical product of a magnitude of the value of the steered angle variable being no less than a predetermined value, the value of the steered angle variable being a value indicating one of a right turn or a left turn and also the value of the hitch angle variable being a value indicating the other of the right turn or the left turn, and a rate of increase of a magnitude of the value of the hitch angle variable being no less than a threshold value, is true, and

the handling processing is processing of averting a jackknifing phenomenon, and is executed in a case in which the logical product is determined to be true while the articulated vehicle is traveling in reverse.

2. The jackknifing averting device for an articulated vehicle, according to claim 1, wherein the predetermined value is a value that defines a maximum value of a magnitude of the steered angle.

3. The jackknifing averting device for an articulated vehicle, according to claim 1, wherein the threshold value is zero.

4. The jackknifing averting device for an articulated vehicle, according to claim 1, wherein the threshold value is smaller than zero.

5. The jackknifing averting device for an articulated vehicle, according to claim 1, wherein the handling processing is processing of deceleration of the articulated vehicle.

6. The jackknifing averting device for an articulated vehicle, according to claim 3, wherein the handling processing is processing of notifying a user that a jackknifing state is ongoing.

7. The jackknifing averting device for an articulated vehicle, according to claim 4, wherein the handling processing is processing of notifying a user that there is a high likelihood of lapsing into a jackknifing state.

8. The jackknifing averting device for an articulated vehicle, according to claim 1, wherein

the jackknifing averting device is configured to execute instruction reception processing and steered angle control processing,

the instruction reception processing is processing of receiving an instruction regarding steering of the trailer,

the steered angle control processing is processing of operating the steered angle in response to the instruction, and

the handling processing is processing of stopping the steered angle control processing.

9. A jackknifing averting method for an articulated vehicle in which a tractor and a trailer are linked, the jackknifing averting method comprising:

executing acquisition processing;
executing determining processing; and
executing handling processing, wherein
the acquisition processing is processing of acquiring a value of a steered angle variable, and a value of a hitch angle variable,
the steered angle variable is a variable indicating a steered angle of a steered wheel of the articulated vehicle,
the hitch angle variable is a variable indicating an angle that is made between a front-rear direction of the tractor and a front-rear direction of the trailer,

the determining processing is processing of determining whether a logical product of a magnitude of the value of the steered angle variable being no less than a predetermined value, the value of the steered angle variable being a value indicating one of a right turn or a left turn and also the value of the hitch angle variable being a value indicating the other of the right turn or the left turn, and a rate of increase of a magnitude of the value of the hitch angle variable being no less than a threshold value, is true, and

the handling processing is processing of averting a jackknifing phenomenon, and is executed in a case in which the logical product is determined to be true while the articulated vehicle is traveling in reverse.

10. A jackknifing averting program for an articulated vehicle in which a tractor and a trailer are linked, the jackknifing averting program including commands for causing a computer to execute acquisition processing, determining processing, and handling processing, wherein

the acquisition processing is processing of acquiring a value of a steered angle variable, and a value of a hitch angle variable,
the steered angle variable is a variable indicating a steered angle of a steered wheel of the articulated vehicle,
the hitch angle variable is a variable indicating an angle that is made between a front-rear direction of the tractor and a front-rear direction of the trailer,
the determining processing is processing of determining whether a logical product of a magnitude of the value of the steered angle variable being no less than a predetermined value, the value of the steered angle variable being a value indicating one of a right turn or a left turn and also the value of the hitch angle variable being a value indicating the other of the right turn or the left turn, and a rate of increase of a magnitude of the value of the hitch angle variable being no less than a threshold value, is true, and

the handling processing is processing of averting a jackknifing phenomenon, and is executed in a case in which the logical product is determined to be true while the articulated vehicle is traveling in reverse.

# Fig.1

# Fig.2

```
┌─────────────────────────────┐        ┌──────────────────────┐
│                    ~50       │   ~    │   STEERING SYSTEM  ~60│
│  ┌─────────┐                 │        └──────────────────────┘
│  │   PU    │~52              │        ┌──────────────────────┐
│  └─────────┘                 │        │   DRIVE SYSTEM     ~62│
│  {              ~54  }       │        └──────────────────────┘
│  ┌──────────────────────┐    │        ┌──────────────────────┐
│  │ REVERSE ASSIST PROGRAM│~54a│        │   BRAKE SYSTEM     ~64│
│  └──────────────────────┘    │        └──────────────────────┘
└─────────────────────────────┘   α1   ┌──────────────────────┐
                                        │STEERING ANGLE SENSOR ~70│
                                        └──────────────────────┘
                                   β    ┌──────────────────────┐
        80~                             │ HITCH ANGLE SENSOR  ~72│
    ┌──────────────────┐                └──────────────────────┘
    │  USER INTERFACE  │
    └──────────────────┘
```

# Fig.3

```
                    ┌─────────────┐
                    │    START    │
                    └──────┬──────┘
                           │        ～S10
          NO        ╱──────┴──────╲
    ┌───────────── < REVERSE ASSIST MODE? >
    │               ╲──────┬──────╱
    │                      │ YES
    │                      │        ～S12
    │               ┌──────┴──────────┐
    │               │ ACQUIRE HITCH ANGLE β │
    │               └──────┬──────────┘
    │                      │        ～S14
    │               ┌──────┴──────────┐
    │               │ ACQUIRE STEERED ANGLE α1 │
    │               └──────┬──────────┘
    │                      │        ～S16
    │               ┌──────┴──────────┐
    │               │    α2 (β, α1)    │
    │               └──────┬──────────┘
    │                      │        ～S18
    │               ┌──────┴──────────┐
    │               │ ACQUIRE TARGET VIRTUAL │
    │               │ STEERING ANGLE α2* │
    │               └──────┬──────────┘
    │                      │        ～S20
    │               ┌──────┴──────────┐
    │               │   α1* (α2*, α2)  │
    │               └──────┬──────────┘
    │                      │        ～S22
    │               ╱──────┴──────╲     NO
    │              <  |α1*|>α1th?   >─────┐
    │               ╲──────┬──────╱      │
    │                      │ YES          │
    │                      │     ～S24     │
    │               ┌──────┴──────────┐  │
    │               │   α1* ← ───── · α1th │
    │               └──────┬──────────┘  │
    │                      │◄─────────────┘
    │                      │     ～S26
    │               ┌──────┴──────────┐
    │               │   OUTPUT α1*     │
    │               └──────┬──────────┘
    │                      │
    └──────────────────────┤
                           │
                    ┌──────┴──────┐
                    │     END     │
                    └─────────────┘
```

S24:
$$\alpha1* \leftarrow \frac{\alpha1*}{|\alpha1*|} \cdot \alpha1th$$

# Fig.4

# Fig.5

```
              ┌──────────┐
              │  START   │
              └────┬─────┘
                   │              ⟋S30
        NO    ╱────┴────╲
   ┌─────────◁ REVERSE ASSIST MODE? ▷
   │          ╲─────────╱
   │               │ YES
   │               │              ⟋S32
   │          ┌────┴─────┐
   │          │ ACQUIRE α1* │
   │          └────┬─────┘
   │               │              ⟋S34
   │   NO     ╱────┴────╲
   │◁─────────◁ |α1*|≧α1th? ▷
   │          ╲─────────╱
   │               │ YES
   │               │              ⟋S36
   │          ┌────┴─────┐
   │          │ ACQUIRE β │
   │          └────┬─────┘
   │               │              ⟋S38
   │   NO     ╱────┴────╲
   │◁─────────◁ α1*·β<0? ▷
   │          ╲─────────╱
   │               │ YES
   │               │              ⟋S40
   │   NO     ╱────┴────╲
   │◁─────────◁ |β(n)|−|β(n−1)|≧0? ▷
   │          ╲─────────╱
   │               │ YES
   │               │              ⟋S42
   │          ┌────┴─────┐
   │          │ DETERMINATION OF │
   │          │  JACKKNIFING  │
   │          └────┬─────┘
   │               │              ⟋S46
   │          ┌────┴─────┐
   │          │ STOP REVERSE ASSIST MODE │
   │          └────┬─────┘
   │               │              ⟋S48
   │          ┌────┴─────┐
   │          │ WARNING PROCESSING │
   │          └────┬─────┘
   │               │              ⟋S50
   │          ┌────┴─────┐
   │          │ DECELERATING PROCESSING │
   │          └────┬─────┘
   └───────────────┤
              ┌────┴─────┐
              │   END    │
              └──────────┘
```

- S30: REVERSE ASSIST MODE?
- S32: ACQUIRE $\alpha 1*$
- S34: $|\alpha 1*| \geqq \alpha 1 th$?
- S36: ACQUIRE $\beta$
- S38: $\alpha 1* \cdot \beta < 0$?
- S40: $|\beta(n)| - |\beta(n-1)| \geqq 0$?
- S42: DETERMINATION OF JACKKNIFING
- S46: STOP REVERSE ASSIST MODE
- S48: WARNING PROCESSING
- S50: DECELERATING PROCESSING

15

# Fig.6A

# Fig.6B

# Fig.7

# Fig.8

```
                    ┌─────────────┐
                    │    START    │
                    └──────┬──────┘
                           │           ～S30
       NO        ┌─────────▼─────────┐
    ◄────────────┤ REVERSE ASSIST MODE? │
    │            └─────────┬─────────┘
    │                    YES
    │                      │           ～S32
    │            ┌─────────▼─────────┐
    │            │    ACQUIRE α1*     │
    │            └─────────┬─────────┘
    │                      │           ～S34
    │       NO   ┌─────────▼─────────┐
    │  ◄─────────┤    |α1*|≧α1th?     │
    │  │         └─────────┬─────────┘
    │  │                 YES
    │  │                   │           ～S36
    │  │         ┌─────────▼─────────┐
    │  │         │    ACQUIRE β       │
    │  │         └─────────┬─────────┘
    │  │                   │           ～S38
    │  │    NO   ┌─────────▼─────────┐
    │  │ ◄───────┤    α1*·β<0?        │
    │  │ │       └─────────┬─────────┘
    │  │ │               YES
    │  │ │                 │           ～S40a
    │  │ │ NO ┌────────────▼────────────┐
    │  │ │◄───┤ |β(n)|−|β(n−1)|≧Δth(<0)? │
    │  │ │ │  └────────────┬────────────┘
    │  │ │ │             YES
    │  │ │ │               │            ～S42a
    │  │ │ │     ┌─────────▼─────────┐
    │  │ │ │     │ DETECTION OF RISK OF│
    │  │ │ │     │    JACKKNIFING     │
    │  │ │ │     └─────────┬─────────┘
    │  │ │ │               │            ～S48a
    │  │ │ │     ┌─────────▼─────────┐
    │  │ │ │     │ WARNING PROCESSING │
    │  │ │ │     └─────────┬─────────┘
    │  │ │ │               │
    └──┴─┴─┴───────────────┤
                           │
                    ┌──────▼──────┐
                    │    END      │
                    └─────────────┘
```

Decision steps:
- S30: REVERSE ASSIST MODE? (NO / YES)
- S32: ACQUIRE $\alpha 1*$
- S34: $|\alpha 1*| \geq \alpha 1th$? (NO / YES)
- S36: ACQUIRE $\beta$
- S38: $\alpha 1* \cdot \beta < 0$? (NO / YES)
- S40a: $|\beta(n)| - |\beta(n-1)| \geq \Delta th\ (<0)$? (NO / YES)
- S42a: DETECTION OF RISK OF JACKKNIFING
- S48a: WARNING PROCESSING

## INTERNATIONAL SEARCH REPORT

| International application No. |
| --- |
| **PCT/JP2024/004290** |

**A. CLASSIFICATION OF SUBJECT MATTER**

*B62D 6/00*(2006.01)i; *B62D 13/06*(2006.01)i; *B62D 113/00*(2006.01)n; *B62D 115/00*(2006.01)n
FI:   B62D6/00; B62D13/06; B62D115:00; B62D113:00

According to International Patent Classification (IPC) or to both national classification and IPC

**B. FIELDS SEARCHED**

Minimum documentation searched (classification system followed by classification symbols)

B62D6/00; B62D13/06; B62D113/00; B62D115/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | US 2016/0229451 A1 (FORD GLOBAL TECHNOLOGIES, LLC) 11 August 2016 (2016-08-11)<br>entire text, all drawings | 1-10 |
| A | US 2016/0280258 A1 (FORD GLOBAL TECHNOLOGIES, LLC) 29 September 2016 (2016-09-29)<br>entire text, all drawings | 1-10 |
| A | US 2016/0280267 A1 (FORD GLOBAL TECHNOLOGIES, LLC) 29 September 2016 (2016-09-29)<br>entire text, all drawings | 1-10 |
| A | US 2016/0362135 A1 (FORD GLOBAL TECHNOLOGIES, LLC) 15 December 2016 (2016-12-15)<br>entire text, all drawings | 1-10 |

☑ Further documents are listed in the continuation of Box C.     ☑ See patent family annex.

| | |
| --- | --- |
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **08 April 2024** | **23 April 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

International application No.

**PCT/JP2024/004290**

| C. | DOCUMENTS CONSIDERED TO BE RELEVANT | |
|---|---|---|
| Category* | Citation of document, with indication, where appropriate, of the relevant passages | Relevant to claim No. |
| A | US 2020/0001920 A1 (OHIO STATE INNOVATION FOUNDATION) 02 January 2020 (2020-01-02) entire text, all drawings | 1-10 |
| A | US 2014/0277941 A1 (HONDA MOTOR CO., LTD.) 18 September 2014 (2014-09-18) entire text, all drawings | 1-10 |

Form PCT/ISA/210 (second sheet) (July 2022)

## INTERNATIONAL SEARCH REPORT
### Information on patent family members

International application No.

**PCT/JP2024/004290**

| Patent document cited in search report | Publication date (day/month/year) | Patent family member(s) | Publication date (day/month/year) |
|---|---|---|---|
| US 2016/0229451 A1 | 11 August 2016 | DE 102016101070 A1 | |
| US 2016/0280258 A1 | 29 September 2016 | (Family: none) | |
| US 2016/0280267 A1 | 29 September 2016 | DE 102016105382 A1 | |
| US 2016/0362135 A1 | 15 December 2016 | DE 102016209896 A1 | |
| US 2020/0001920 A1 | 02 January 2020 | (Family: none) | |
| US 2014/0277941 A1 | 18 September 2014 | (Family: none) | |

Form PCT/ISA/210 (patent family annex) (July 2022)

**REFERENCES CITED IN THE DESCRIPTION**

**Patent documents cited in the description**

- US 9229452 B